# EUROPÄISCHE PATENTSCHRIFT

(11) **EP 3 470 799 B1**
(45) Veröffentlichungstag und Bekanntmachung des Hinweises auf die Patenterteilung: **18.05.2022**
(21) Anmeldenummer: 18000768.4
(22) Anmeldetag: 28.09.2018
(51) Int. Cl.: G01F 1/66

(54) **MESSEINRICHTUNG ZUR ERMITTLUNG EINER FLUIDGRÖSSE**
MEASURING DEVICE FOR DETECTING FLUID PROPERTY
DISPOSITIF DE MESURE PERMETTANT DE DÉTERMINER UNE PROPRIÉTÉ DE FLUIDE

(30) Priorität: 12.10.2017 DE 102017009462
(43) Veröffentlichungstag der Anmeldung: 17.04.2019
(73) Patentinhaber: Diehl Metering GmbH, 91522 Ansbach (DE)
(72) Erfinder: Ploß, Peter, 95445 Bayreuth (DE); Mayle, Michael, 91522 Ansbach (DE); Benkert, Andreas, 91522 Ansbach (DE)
(74) Vertreter: Diehl Patentabteilung

(56) Entgegenhaltungen:
- EP-A1- 1 701 140
- DE-A1-102013 101 950
- DE-A1-102015 008 146
- US-A1- 2014 260 668
- US-B2- 7 819 022

## Beschreibung

Die Erfindung betrifft eine Messeinrichtung zur Ermittlung einer ein Fluid und/oder eine Fluidströmung des Fluids betreffenden Fluidgröße mit einer Steuereinrichtung, einem das Fluid aufnehmenden und/oder von dem Fluid durchströmbaren Messrohr und einem ersten und einem zweiten voneinander beabstandet an dem Messrohr angeordneten Schwingungswandler, wobei durch die Steuereinrichtung der erste und/oder der zweite Schwingungswandler ansteuerbar sind, um eine durch eine oder eine jeweilige Seitenwand des Messrohrs geführte Welle anzuregen, wobei die geführte Welle Kompressionsschwingungen des Fluids anregt, die über das Fluid zu dem jeweils anderen Schwingungswandler führbar und dort durch die Steuereinrichtung zur Ermittlung von Messdaten erfassbar sind, wobei die Fluidgröße durch die Steuereinrichtung in Abhängigkeit der Messdaten ermittelbar ist. Daneben betrifft die Erfindung ein Verfahren zur Ermittlung einer Fluidgröße.

US 2014/260668 A1, EP 1 701 140 A1, US 7 819 022 B2, DE 10 2015 008146 A1 und DE 10 2013 101950 A1 beziehen sich jeweils auf ein Messgerät zum Messen des Durchflusses eines strömenden Mediums in Rohrleitungen bwz. in Strömungskanälen.

Eine Möglichkeit, einen Durchfluss durch ein Messrohr zu messen, sind Ultraschallzähler.

Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflektorelementen zu einem zweiten Ultraschallwandler geführt wird. Aus der Laufzeit der Ultraschallwelle zwischen den Ultraschallwandlern bzw. aus einem Laufzeitunterschied bei einer Vertauschung von Sender und Empfänger kann eine Durchflussgeschwindigkeit durch das Messrohr bestimmt werden.

Bei einer direkten Einkopplung der Ultraschallwellen in das Fluid wird typischerweise nur ein Bruchteil des durchströmten Volumens zwischen den Ultraschallwandlern durch die eingestrahlten Ultraschallwellen durchquert, womit auch nur Informationen aus diesem Teilvolumen genutzt werden können. Dies kann zu einer starken Abhängigkeit der Messgröße von dem Strömungsprofil führen, wobei sich das Strömungsprofil in Abhängigkeit der Strömungsgeschwindigkeit oder von anderen Faktoren ändern kann. Diese Strömungsprofilabhängigkeit kann typischerweise nur teilweise kompensiert werden, womit aus der unvollständigen Berücksichtigung des Strömungsprofils Messfehler resultieren können.

Der berücksichtigte Bereich des Volumens zwischen den Ultraschallwandlern kann vergrößert werden, wenn das Fluid nicht direkt angeregt wird, sondern zunächst geführte Wellen, insbesondere Lamb-Wellen, in einer Seitenwand des Messrohrs angeregt werden, die wiederum das Fluid zu Kompressionsschwingungen anregen. Ansätze zur Einkopplung geführter Wellen in eine Wand des Messrohrs sind beispielsweise aus der Druckschrift US 4735097 A und aus dem Artikel G. Lindner, "Sensors and actuators based on surface acustic waves propagating along solid-liquid interfaces", J. Phys. D: Appl .Phys. 41 (2008) 123002, bekannt.

Durchflusszähler und andere Messeinrichtungen zur Messung von Fluideigenschaften sollen typischerweise über einen weiten Bereich von Durchflussgeschwindigkeiten eine hohe Messgenauigkeit ermöglichen. Im Bereich von niedrigen Durchflussmengen bzw. Flussgeschwindigkeiten ist diese Messgenauigkeit typischerweise durch die Zeitauflösung der Messung der Signallaufzeiten begrenzt. Durch eine Verringerung des Innendurchmessers des Messrohrs durch einen entsprechenden Messeinsatz kann die Strömungsgeschwindigkeit zwar erhöht und somit das Problem der Zeitauflösung verringert werden, hieraus resultiert jedoch ein höherer baulicher Aufwand für die Messeinrichtung und ein höherer Druckverlust an der Messeinrichtung. Potentiell kann die Zeitauflösung zwar auch durch eine Verbesserung der Sensorik bzw. Elektronik der Messeinrichtung verbessert werden, dies erfordert jedoch einen hohen technischen Aufwand.

Der Erfindung liegt somit die Aufgabe zugrunde, eine Messgenauigkeit für Fluidgrößen, insbesondere für einen Durchfluss betreffende Fluidgrößen, bei niedrigen Durchflussmengen mit möglichst geringem technischem Aufwand zu verbessern.

Die Aufgabe wird durch eine Messeinrichtung nach einem der beigefügten Ansprüche 1-8 und ein Verfahren nach dem beigefügten Anspruch 9 gelöst, wobei wenigstens eine weitere Seitenwand des Messrohres wenigstens eine sich in Strömungsrichtung erstreckende Vertiefung aufweist, die den Strömungsquerschnitt des Messrohres vergrößert.

Durch die Vertiefung, die auch als Rille, Furche oder Ausstülpung bezeichnet werden kann, wird eine Art Nebenkanal gebildet, durch den ein Teil des durch das Messrohr geführten Fluids strömen kann. Die Verteilung des Fluidstroms auf den Bereich der Vertiefung oder Vertiefungen und auf den Bereich, der außerhalb der Vertiefungen liegt, hängt von der Strömungsgeschwindigkeit ab. Da die Abmessungen der Vertiefung verglichen mit den Gesamtabmessungen des Messrohrs relativ klein sein können, wechselwirkt jener Teil des Fluids, der im Bereich der Vertiefung geführt wird, stärker mit den Wänden des Messrohrs als jener Teil des Fluids, der außerhalb der Vertiefungen und insbesondere nahe an der Rohrmitte geführt wird. Ist der Durchfluss durch das Messrohr gering, so wird ein Großteil dieses Durchflusses nahe der Rohrmitte und somit außerhalb der Vertiefung oder Vertiefungen geführt. Mit zunehmend größerem Durchfluss, insbesondere bei einem Übergang vom laminaren in den turbulenten Bereich, steigt die Flussgeschwindigkeit in der Nähe der Rohrwände relativ zu derjenigen in der Rohrmitte. Dies gilt insbesondere auch im Bereich der Vertiefung bzw. der Vertiefungen, so dass der Anteil der Vertiefung bzw. Vertiefungen am Fluidtransport steigt. Das Verhältnis der Durchflussmenge pro Zeit durch die Vertiefung bzw. die Vertiefungen zu der Durchflussmenge pro Zeit durch den Bereich außerhalb der Vertiefung bzw. Vertiefungen steigt somit mit steigender Gesamtdurchflussmenge.

Wird nun die Messung derart durchgeführt, dass die Kompressionswellen, insbesondere die Ultraschallwellen, im Wesentlichen ausschließlich durch den Bereich des Messrohres geführt werden, der außerhalb der Vertiefungen liegt, so wird näherungsweise ausschließlich jener Teil der Fluidströmung berücksichtigt, der im Bereich außerhalb der Vertiefung oder der Vertiefungen strömt. Bei geringen Durchflussmengen erfolgt, wie vorangehend erläutert, nahezu der gesamte Fluidtransport in diesem Bereich. Wird die Durchflussmenge stark erhöht, so wird ein Teil des Fluids durch die Vertiefungen und somit an dem im Rahmen der Messung berücksichtigten Bereich vorbeigeführt. Dies führt dazu, dass die Durchflussmenge pro Zeit nicht mehr proportional zu der gemessenen Flussgeschwindigkeit ist, sondern dass bei niedrigen Durchflussmengen eine demgegenüber relativ überhöhte Geschwindigkeit gemessen wird. Hierdurch können die obig beschriebenen Auflösungsprobleme bei niedrigen Durchflussmengen reduziert bzw. vermieden werden.

Das Messrohr kann aus mehreren gewinkelt zueinander stehenden Seitenwänden gebildet sein. Die Grundform des Messrohres kann insbesondere rechteckig sein. Die Innenflächen der Seitenwände können, abgesehen vom Bereich der Vertiefung, im Wesentlichen flach sein bzw. eine stetige Krümmung ohne Vorzeichenwechsel aufweisen. Die Vertiefung kann derart gebildet sein, dass die Krümmung der Innenfläche in Umfangsrichtung des Messrohres wenigstens zweimal ihr Vorzeichen wechselt, um eine Vertiefung auszubilden.

Es können Messungen an einer durch das Messrohr strömenden Fluidströmung, jedoch auch an einem im Messrohr stehenden Fluid durchgeführt werden. Die Messeinrichtung kann auch mehr als zwei Schwingungswandler aufweisen. Die Schwingungswandler können an der gleichen Seitenwand oder an verschiedenen, insbesondere gegenüberliegenden, Seitenwänden angeordnet sein. Wenigstens ein weiterer Schwingungswandler kann beispielsweise dazu genutzt werden, durch den ersten und/oder den zweiten Schwingungswandler ausgesandte Schwingungen zusätzlich durch den weiteren Schwingungswandler zu erfassen, um z. B. unterschiedliche Ausbreitungspfade zu berücksichtigen oder Messdaten zu validieren.

Die Nutzung eines Schwingungstransports zur Erfassung von Fluideigenschaften ist prinzipiell im Stand der Technik bekannt. Beispielsweise werden in Ultraschallzählern häufig Laufzeitunterschiede einer Laufzeit einer Schwingung zwischen einem ersten und einem zweiten Ultraschallwandler und umgekehrt erfasst und hieraus kann eine Flussgeschwindigkeit bestimmt werden. Es können jedoch auch andere Messdaten gewonnen werden, um Fluideigenschaften zu bestimmen. Beispielsweise kann eine Signalamplitude am empfangenden Schwingungswandler ausgewertet werden, um eine Dämpfung der Schwingung beim Transport durch das Fluid zu erfassen. Amplituden können auch frequenzabhängig ausgewertet werden und es können absolute oder relative Amplituden bestimmter Spektralbereiche ausgewertet werden, um ein spektral unterschiedliches Dämpfungsverhalten im Fluid zu erfassen. Auch Phasenlagen unterschiedlicher Frequenzbänder können ausgewertet werden, um beispielsweise Informationen über das Dispersionsverhalten der Messstrecke, insbesondere das Dispersionsverhalten im Fluid und/oder im Messrohr zu gewinnen. Alternativ oder ergänzend können auch Veränderungen der spektralen Zusammensetzung bzw. der Amplitude über die Zeit, beispielsweise innerhalb eines Messpulses, ausgewertet werden.

Durch Auswertung dieser Größen können als Fluidgrößen beispielsweise eine Durchflussgeschwindigkeit und/oder ein Durchflussvolumen und/oder eine Dichte, Temperatur und/oder Viskosität des Fluids ermittelt werden. Ergänzend oder alternativ kann beispielsweise eine Schallgeschwindigkeit im Fluid und/oder eine Zusammensetzung des Fluids, beispielsweise ein Mischungsverhältnis unterschiedlicher Komponenten, ermittelt werden. Verschiedene Ansätze zur Gewinnung dieser Fluidgrößen aus den vorangehend erläuterten Messgrößen sind im Stand der Technik bekannt und sollen daher nicht detailliert dargestellt werden. Beispielsweise können Zusammenhänge zwischen einer oder mehreren Messgrößen und der Fluidgröße empirisch ermittelt werden und es kann beispielsweise eine Look-up-Tabelle oder eine entsprechende Formel genutzt werden, um die Fluidgröße zu ermitteln.

Eine Anregung der geführten Wellen, insbesondere eine weitgehend modenreine Anregung von Lamb-Wellen, ist auf vielfältige Weise möglich. Beispielsweise können der erste und/oder der zweite Schwingungswandler ebene, insbesondere piezoelektrische, Schwingungswandler sein, die parallel zu der Seitenwand angeordnet sind. Um hierbei eine Modenselektivität der Anregung zu erreichen, kann eine Anregung in beabstandeten Anregungsabständen erfolgen. Durch eine Anpassung der Anregungsstruktur an eine gewünschte Wellenlänge wird eine Modenselektivität erreicht. Alternativ ist es beispielsweise möglich, dass der Schwingungswandler ein Interdigital-Transducer ist, der eine Elektrodenstruktur aufweist, bei der entgegengesetzt gepolte Elektroden fingerartig ineinandergreifen. Durch eine Abstimmung der Abstände der ineinander eingreifenden Elektroden kann die Anregung von Schwingungen mit bestimmten Wellenlängen bevorzugt bzw. unterdrückt werden.

Der erste und der zweite Schwingungswandler können an der gleichen Seitenwand angeordnet sein und diese Seitenwand und eine gegenüberliegende Seitenwand können zumindest in einem zwischen dem ersten und dem zweiten Schwingungswandler liegenden Messabschnitt ebene und/oder zueinander parallele Innenflächen und/oder konstante Wandstärken aufweisen oder der erste und der zweite Schwingungswandler können an einander gegenüberliegenden Seitenwänden angeordnet sein, die zumindest in dem Messabschnitt ebene und/oder zueinander parallele Innenflächen und/oder konstante Wandstärken aufweisen können. Die Seitenwand oder Seitenwände, an der oder an denen die Schwingungswandler angeordnet sind, können somit derart ausgebildet sein, dass eine ungestörte Anregung bzw. Führung der geführten Welle in der jeweiligen Seitenwand ermöglicht wird. Erfindungsgemäß sind die Vertiefung bzw. Vertiefungen ausschließlich in Seitenwänden vorgesehen, an denen keiner der Schwingungswandler angeordnet ist.

Die Innenfläche der weiteren Seitenwand kann zuminest in dem oder einem zwischen dem ersten und dem zweiten Schwingungswandler liegenden Messabschnitt außerhalb der wenigstens einen Vertiefung eine konstante Wandstärke aufweisen und/oder ihre Innenfläche kann dort eben sein oder eine stetige Krümmung ohne Vorzeichenwechsel aufweisen. Über die Seitenwandabschnitte außerhalb der Vertiefung oder Vertiefungen kann somit ein regelmäßiges Hauptströmungsvolumen, das beispielsweise rechteckig sein kann, definiert werden, innerhalb dem die Messung erfolgt und durch das bei niedrigen Flussgeschwindigkeiten nahezu der gesamte Fluidström geführt wird.

Der erste und der zweite Schwingungswandler können an der gleichen Seitenwand angeordnet sein und die Innenflächen dieser Seitenwand und einer gegenüberliegenden Seitenwand können ein Hauptströmungsvolumen aufspannen, und/oder der erste und der zweite Schwingungswandler können an einander gegenüberliegenden Seitenwänden angeordnet sein, deren Innenflächen das Hauptströmungsvolumen aufspannen, wobei die wenigstens eine Vertiefung außerhalb des Hauptströmungsvolumens liegt und ein jeweiliges Nebenströmungsvolumen bildet. Wie bereits eingangs erläutert, wird bei niedrigen Strömungsgeschwindigkeiten nahezu der gesamte Fluidstrom durch das Hauptströmungsvolumen geführt, da die Strömungsgeschwindigkeit in den Vertiefungen aufgrund der größeren Nähe des Fluids zur Wand deutlich verlangsamt ist. Mit zunehmender Strömungsgeschwindigkeit verteilt sich der Fluidstrom auf das Hauptströmungsvolumen und das oder die Nebenströmungsvolumen. Wie bereits erläutert führt dies dazu, dass die gemessene Flussgeschwindigkeit im Vergleich mit einem Messrohr, das keine entsprechende Vertiefung aufweist, mit sinkendem Durchflussvolumen langsamer sinkt, womit eine Messgenauigkeit bei niedrigem Durchflussvolumen erhöht werden kann. Da dennoch ein eindeutiger Zusammenhang zwischen der gemessenen Flussgeschwindigkeit und dem Durchflussvolumen besteht und nur die funktionale Abhängigkeit der Flussgeschwindigkeit von dem Durchflussvolumen durch das Vorsehen der Vertiefungen verändert wird, kann eine Genauigkeit einer Durchflussmengenmessung insgesamt verbessert werden.

Die Seitenwand, an der, oder die Seitenwände, an denen der erste und/oder der zweite Schwingungsschallwandler angeordnet sind, kann oder können gewinkelt, insbesondere senkrecht, zu der weiteren Seitenwand stehen. Das Messrohr weist zumindest in einem zwischen dem ersten und dem zweiten Schwingungswandler gelegenen Messabschnitt einen abgesehen von der wenigstens einen Vertiefung rechteckigen Innenquerschnitt auf.

Es ist hierbei möglich, dass die Ecken des Innen- und/oder Außenquerschnitts aus produktionstechnischen Gründen oder zur Verbesserung der Strömungseigenschaften abgerundet sind. Bei einem rechteckigen Messrohr können geführte Wellen zuverlässig in einzelnen Seitenwänden geführt werden und ein relativ großer Teil des Messrohrquerschnitts kann von Ultraschallwellen zu Messzwecken durchstrahlt werden, womit eine Abhängigkeit der Messwerte vom Strömungsprofil reduziert werden kann.

Die Vertiefung kann einen ebenen oder gekrümmten, insbesondere kreissegmentförmigen, Vertiefungsboden und gewinkelt zu dem Vertiefungsboden verlaufende Vertiefungswände aufweisen. Resultierende Ecken im Übergangsbereich zu dem Abschnitt der Seitenwand außerhalb der Vertiefung und zwischen Vertiefungsboden und Vertiefungswand können abgerundet sein. Dies kann zur einfacheren Herstellung des Messrohrs dienen und/oder die Strömungseigenschaften im Messrohr verbessern.

In Längsrichtung des Messrohrs kann sich die Vertiefung zumindest über den oder einen Messrohrabschnitt zwischen dem ersten und dem zweiten Schwingungswandler erstrecken. Vorzugsweise erstreckt sich die Vertiefung in Längsrichtung über den ersten und/oder den zweiten Schwingungswandler hinaus. Das Querschnittsprofil der Vertiefung kann im Wesentlichen über die gesamte Länge der Vertiefung konstant sein.

Die weitere Seitenwand kann wenigstens zwei separate Vertiefungen aufweisen. Wie vorangehend erläutert basiert die Verbesserung der Messgenauigkeit bei geringen Durchflussmengen in der erfindungsgemäßen Messeinrichtung im Wesentlichen darauf, dass ein Fluidstrom innerhalb der Vertiefung näher an der Wand des Messrohr entlanggeführt wird bzw. teilweise von der Wand mit relativ engem Abstand umgeben wird. Die Vertiefungen sollten somit vorzugsweise nicht zu groß gewählt werden. Zugleich kann es jedoch erwünscht sein, eine relativ große zusätzliche Querschnittsfläche durch die Vertiefungen bereitzustellen. Dies kann erreicht werden, indem mehrere Vertiefungen an einer Seitenwand vorgesehen werden.

Ergänzend oder alternativ ist es möglich, dass die Messeinrichtung wenigstens zwei der weiteren Seitenwände aufweist, die wenigstens eine jeweilige Vertiefung aufweisen. Auch hierdurch kann der durch die Vertiefungen bereitgestellte zusätzliche Strömungsquerschnitt vergrößert werden.

Neben der erfindungsgemäßen Messeinrichtung betrifft die Erfindung ein Verfahren zur Ermittlung einer ein Fluid und/oder eine Fluidströmung des Fluids betreffenden Fluidgröße mit einer Messeinrichtung, die eine Steuereinrichtung, ein das Fluid aufnehmendes und/oder von dem Fluid durchströmbares Messrohr und einen ersten und einen zweiten voneinander beabstandet an dem Messrohr angeordneten Schwingungswandler umfasst, wobei durch die Steuereinrichtung der erste und/oder der zweite Schwingungswandler angesteuert werden, um eine durch eine oder eine jeweilige Seitenwand des Messrohrs geführte Welle anzuregen, wobei die geführte Welle Kompressionsschwingungen des Fluids anregt, die über das Fluid zu dem jeweils anderen Schwingungswandler geführt und dort durch die Steuereinrichtung zur Ermittlung von Messdaten erfasst werden, wobei die Fluidgröße durch die Steuereinrichtung in Abhängigkeit der Messdaten ermittelt wird, wobei wenigstens eine weitere Seitenwand des Messrohres wenigstens eine sich in Strömungsrichtung erstreckende Vertiefung aufweist, durch die der Strömungsquerschnitt des Messrohres vergrößert wird.

Das erfindungsgemäße Verfahren kann mit den zur erfindungsgemäßen Messeinrichtung erläuterten Merkmalen mit den dort genannten Vorteilen weitergebildet werden und umgekehrt.

Weitere Vorteile und Einzelheiten der Erfindung ergeben sich aus dem folgenden Ausführungsbeispiel sowie den zugehörigen Zeichnungen. Hierbei zeigen schematisch:
- Fig. 1: den prinzipiellen Aufbau sowie das Messprinzip eines Ausführungsbeispiels einer erfindungsgemäßen Messeinrichtung, mit der ein Ausführungsbeispiel des erfindungsgemäßen Verfahrens durchführbar ist,
- Fig. 2 und 3: geschnittene Ansichten des Messrohrs der in Fig. 1 gezeigten Messeinrichtung, und
- Fig. 4: das Verhältnis einer ermittelten Flussgeschwindigkeit zur mittleren Flussgeschwindigkeit im gesamten Messbereich für das in Fig. 1 bis 3 gezeigte Ausführungsbeispiel und ein Vergleichsmessrohr.

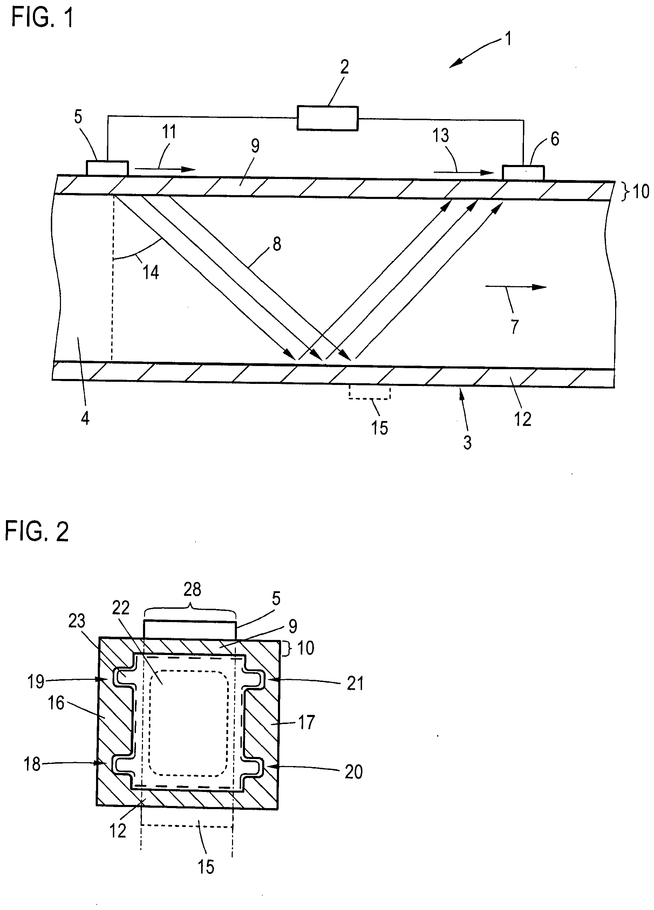

Fig. 1 zeigt eine Messeinrichtung 1 zur Ermittlung einer ein Fluid und/oder eine Fluidströmung betreffenden Fluidgröße. Das Fluid wird hierbei in eine durch den Pfeil 7 gezeigte Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeitdifferenz kann somit eine über den Pfad des jeweiligen Ultraschallstrahls 8 ermittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle, nämlich eine Lamb-Welle, in der Seitenwand 9 angeregt. Solche Wellen können angeregt werden, wenn die Dicke der Seitenwand vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Wellen in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle der Seitenwand 9 an, die schematisch durch den Pfeil 13 dargestellt ist und die durch den Schwingungswandler 6 erfasst werden kann, um die Laufzeit zu bestimmen. Alternativ könnte eine Erfassung der Schwingungen über den Schwingungswandler 15 erfolgen, der an der Seitenwand 12 angeordnet ist.

Im gezeigten Beispiel werden die Ultraschallstrahlen 8 auf ihrem Weg zu den Schwingungswandlern 6, 15 nicht bzw. nur einmal reflektiert. Es wäre selbstverständlich möglich, eine längere Messstrecke zu nutzen, wobei die Ultraschallstrahlen 8 mehrfach an den Seitenwänden 9, 12 reflektiert werden.

Um eine Auswertung der Messdaten zu vereinfachen, sollen die Ultraschallstrahlen 8 vorzugsweise in einem einzigen Rayleigh-Winkel 14 in das Fluid abgestrahlt werden. Dies kann dadurch erreicht werden, dass eine möglichst modenreine Anregung der Seitenwand 9 erfolgt, so dass eine Lamb-Welle angeregt wird, die im Wesentlichen nur eine einzige Mode aufweist. Dies kann beispielsweise erreicht werden, indem die Eigenmoden der Schwingungswandler 5, 6 auf die anzuregende Mode abgestimmt sind, indem durch die Schwingungswandler 5, 6 eine Anregung in mehreren Anregungsbereichen erfolgt, wobei die Abstände und/oder Phasen der Anregung auf die anzuregende Mode abgestimmt sind, indem ein Interdigital-Transducer mit einer Elektrodenstruktur genutzt wird, die auf die anzuregende Mode abgestimmt ist, oder Ähnliches.

Bei sehr niedrigen Durchflussmengen kann bei der beschriebenen Messung das Problem auftreten, dass die mittlere Durchflussgeschwindigkeit im von den Ultraschallstrahlen 8 durchstrahlten Bereich sehr gering wird, womit der Laufzeitunterschied zwischen einer Laufzeit von dem ersten Schwingungswandler 5 zum zweiten Schwingungswandler 6 und umgekehrt sehr gering wird und somit häufig nicht mehr mit ausreichender Exaktheit gemessen werden kann. Um kleinere Durchflussmengen zu messen, müsste somit der Durchmesser des Messrohrs reduziert werden oder das Messrohr müsste im Messbereich künstlich, beispielsweise durch einen entsprechenden Einsatz, verengt werden. Dies führt jedoch dazu, dass der Druckabfall an der Messeinrichtung steigt, was häufig nicht gewünscht ist.

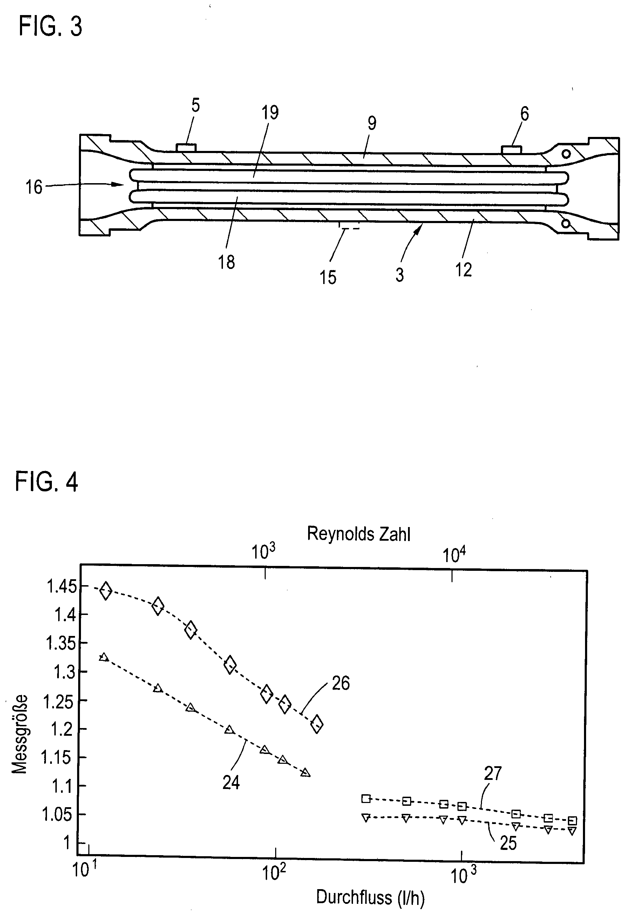

Daher wird stattdessen ausgenutzt, dass ein Strömungsprofil in Abhängigkeit der Strömungsgeschwindigkeit und somit auch in Abhängigkeit der Durchflussmenge unterschiedliche Formen aufweisen kann, wenn das Messrohr 3 entsprechend geformt wird. Dies wird im Folgenden mit Bezug auf Fig. 2 und 3 erläutert.

Das Messrohr 3 wird durch Seitenwände 9, 12, 16 und 17 gebildet, die im Wesentlichen orthogonal aufeinanderstehen, womit ein im Wesentlichen rechteckiger Strömungsquerschnitt gebildet wird. Dieser wird jedoch dadurch modifiziert, dass in den Seitenwänden 16, 17, also in jenen Seitenwänden, an denen keine Schwingungswandler 5, 6, 15 angeordnet sind und die keinen solchen Wänden gegenüberliegen und somit nicht relevant für die Führung der Ultraschallstrahlen 8 sind, Vertiefungen 18 - 21 vorgesehen werden. Diese Vertiefungen sind aus Übersichtlichkeitsgründen in Fig. 1 nicht dargestellt. Das Volumen des Messrohrs setzt sich somit aus einem Hauptströmungsvolumen, das durch die Innenflächen der Seitenwände 9, 12 aufgespannt wird, und mehreren Nebenströmungsvolumen, die jeweils durch die Vertiefungen 18 - 21 gebildet werden, zusammen. In den Nebenströmungsvolumen, also in den Vertiefungen 18 - 21, ist bei niedrigen Strömungsgeschwindigkeiten die Strömungsgeschwindigkeit deutlich niedriger als im Hauptströmungsvolumen, da das Fluid im Nebenströmungsvolumen durch die enge Nachbarschaft zu den Seitenwänden 16, 17 gebremst wird. Bei niedrigen Durchflussgeschwindigkeiten folgt ein Fluidtransport somit zum großen Teil in dem Bereich 22 um die Rohrmitte herum, in dem das Fluid relativ hohe Geschwindigkeiten aufweist und relativ weit von den Seitenwänden 9, 12, 16, 17 beabstandet ist. Der Bereich 22 markiert jenen Abschnitt des Strömungsquerschnitts, außerhalb von dem die Strömungsgeschwindigkeit wenigstens 20 % geringer ist als in der Rohrmitte. Mit zunehmend hohem Durchfluss erweitert sich dieser Bereich zu dem Bereich 23, der auch in die Nebenströmungsvolumen und somit in die Vertiefungen 18 - 21 eindringt. Die gezeigte Erweiterung des Bereichs kann einer Erhöhung des Durchflusses von beispielsweise 16 l/h auf 4.000 l/h entsprechen.

Wie in Fig. 2 zu erkennen ist, liegt der Bereich 22, innerhalb dem ein Großteil des Fluidtransports bei niedrigen Durchflussmengen erfolgt, vollständig innerhalb eines messrelevanten Bereichs 28, der von den Ultraschallstrahlen 8 durchquert wird. Der Bereich 23, der bei hohen Durchflüssen einen Großteil des Fluidtransports bewerkstelligt, liegt hingegen zum Teil außerhalb des messrelevanten Bereichs 28, so dass ein relativ großer Anteil des Fluids an dem messrelevanten Bereich 28 vorbeigeführt wird. Gegenüber einem Messrohr, das die Vertiefungen 18 - 21 nicht aufweist, wird somit bei relativ niedrigen Durchflüssen ungefähr die gleiche Strömungsgeschwindigkeit gemessen, während bei hohen Durchflüssen eine niedrige Strömungsgeschwindigkeit gemessen wird bzw. ein niedrigerer Druck am Messrohr abfällt. Durch das Vorsehen der Vertiefungen 18 - 21 kann somit der Messbereich, in dem einerseits bei niedrigen Durchflüssen eine ausreichende Auflösung erreicht wird und andererseits bei hohen Durchflüssen kein allzu großer Druck am Messrohr 3 abfällt, gegenüber einer rein rechteckigen Form des Messrohrs 3 erweitert werden.

Um diesen Effekt zu verdeutlichen, ist in Fig. 4 das Verhältnis zwischen der mittleren Strömungsgeschwindigkeit im messrelevanten Bereich 28, die im Wesentlichen der gemessenen Strömungsgeschwindigkeit entspricht, und der mittleren Strömungsgeschwindigkeit im gesamten Rohrquerschnitt einerseits für das in dem vorangehend diskutierten Ausführungsbeispiel genutzte Messrohr 3 und andererseits für ein Vergleichsmessrohr gezeigt, das einen rechteckigen Strömungsquerschnitt aufweist. Hierbei zeigen die Linien 26, 27 Simulationen für das Messrohr 3 und die Linien 24, 25 Simulationen für das Vergleichsmessrohr. Die Linien 24, 26 betreffen den laminaren Strömungsbereich und die Linien 25, 27 den turbulenten Strömungsbereich. Der dargestellte Faktor entspricht dem Quotienten aus der Strömungsgeschwindigkeit im messrelevanten Bereich 28 und der mittleren Strömungsgeschwindigkeit im gesamten Rohrquerschnitt.

Aus Fig. 4 ist klar erkennbar, dass dieser Faktor für das Messrohr 3 mit den darin vorgesehenen Vertiefungen insbesondere für niedrige Strömungsgeschwindigkeiten deutlich höher ist als für das Vergleichsmessrohr. Da jedoch die mittlere Strömungsgeschwindigkeit im gesamten Rohrquerschnitt proportional zur Durchflussmenge ist, werden in dem Messrohr 3 mit den in den Seitenwänden 16, 17 vorgesehenen Vertiefungen 18 - 21 bei gleichem Durchfluss insbesondere bei niedrigen Durchflussmengen höhere Strömungsgeschwindigkeiten gemessen. Somit wird die Grenze der Zeitauflösung und somit der Geschwindigkeitsauflösung der Messeinrichtung bei gleicher genutzter Messelektronik erst bei erheblich niedrigeren Durchflüssen erreicht, womit durch Verwendung des Messrohrs 3 genauere Messungen bei niedrigen Durchflüssen ermöglicht werden.

Die Erhöhung des in Fig. 4 aufgetragenen Faktors zu niedrigen Durchflussmengen hin kann auch als hydrodynamische Anhebung H der gemessenen Durchflussgeschwindigkeit bezeichnet werden. Eine solche Größe kann berechnet werden, indem der Quotient des in Fig. 4 dargestellten Faktors für unterschiedliche Durchflüsse bestimmt wird. Wird dieser hydrodynamische Anhebungsfaktor H zwischen zwei Durchflüssen, beispielsweise zwischen einem Durchfluss von 16 l/h und 4.000 l/h, sowohl für das Messrohr 3 als auch für das Vergleichsmessrohr ermittelt, kann ein Verbesserungsfaktor als Quotient der hydrodynamischen Anhebungsfaktoren berechnet werden, der beschreibt, inwieweit die hydrodynamische Anhebung für das vorgeschlagene Messrohr 3 gegenüber einem rechteckigen Vergleichsmessrohr verbessert ist. Simulationen haben für ein Messrohr mit der in Fig. 2 und 3 gezeigten Struktur gegenüber einem entsprechend rechteckigen Vergleichsmessrohr einen Verbesserungsfaktor von 1,08 ergeben, also eine deutliche Anhebung der gemessenen Geschwindigkeiten bei niedrigen Durchflüssen, wodurch diese genauer erfasst werden können.

### Bezugszeichenliste

- 1: Messeinrichtung
- 2: Steuereinrichtung
- 3: Messrohr
- 4: Innenraum
- 5: Schwingungswandler
- 6: Schwingungswandler
- 7: Pfeil
- 8: Ultraschallstrahl
- 9: Seitenwand
- 10: Wandstärke
- 11: Pfeil
- 12: Seitenwand
- 13: Pfeil
- 14: Rayleigh-Winkel
- 15: Schwingungswandler
- 16: Seitenwand
- 17: Seitenwand
- 18: Vertiefung
- 19: Vertiefung
- 20: Vertiefung
- 21: Vertiefung
- 22: Bereich
- 23: Bereich
- 24: Linie
- 25: Linie
- 26: Linie
- 27: Linie
- 28: Bereich

## Patentansprüche

1. Messeinrichtung zur Ermittlung einer ein Fluid und/oder eine Fluidströmung des Fluids betreffenden Fluidgröße mit einer Steuereinrichtung (2), einem das Fluid aufnehmenden und/oder von dem Fluid durchströmbaren Messrohr (3) und einem ersten und einem zweiten voneinander beabstandet an dem Messrohr angeordneten Schwingungswandler (5, 6, 15), wobei durch die Steuereinrichtung (2) der erste und/oder der zweite Schwingungswandler (5, 6, 15) ansteuerbar sind, um eine durch eine oder eine jeweilige Seitenwand (9, 12) des Messrohrs (3) geführte Welle anzuregen, wobei die geführte Welle Kompressionsschwingungen des Fluids anregt, die über das Fluid zu dem jeweils anderen Schwingungswandler (5, 6, 15) führbar und dort durch die Steuereinrichtung (2) zur Ermittlung von Messdaten erfassbar sind, wobei die Fluidgröße durch die Steuereinrichtung (2) in Abhängigkeit der Messdaten ermittelbar ist, wobei wenigstens eine weitere Seitenwand (16, 17) des Messrohres (3) wenigstens eine sich in Strömungsrichtung erstreckende Vertiefung (18 - 21) aufweist, die den Strömungsquerschnitt des Messrohres (3) vergrößert, wobei das Messrohr (3) zumindest in einem zwischen dem ersten und dem zweiten Schwingungswandler (5, 6, 15) gelegenen Messabschnitt einen abgesehen von der wenigstens einen Vertiefung (18 - 21) rechteckigen Innenquerschnitt aufweist, wobei die Vertiefung (18 - 21) oder Vertiefungen (18 - 21) ausschließlich in Seitenwänden vorgesehen sind, an denen keiner der Schwingungswandler (5, 6, 15) angeordnet ist, wobei der erste und der zweite Schwingungswandler (5, 6) an der gleichen Seitenwand (9) angeordnet sind und die Innenfläche dieser Seitenwand (9) und einer gegenüberliegenden Seitenwand (12) ein Hauptströmungsvolumen aufspannen, oder wobei der erste und der zweite Schwingungswandler (5, 15) an einander gegenüberliegenden Seitenwänden (9, 12) angeordnet sind, deren Innenflächen das Hauptströmungsvolumen aufspannen, wobei die wenigstens eine Vertiefung (18 - 21) außerhalb des Hauptströmungsvolumens liegt und ein jeweiliges Nebenströmungsvolumen bildet.

2. Messeinrichtung nach Anspruch 1, **dadurch gekennzeichnet, dass** der erste und der zweite Schwingungswandler (5, 6,) an der gleichen Seitenwand (9) angeordnet sind und diese Seitenwand (9) und eine gegenüberliegende Seitenwand (12) zumindest in dem zwischen dem ersten und dem zweiten Schwingungswandler liegenden Messabschnitt ebene und/oder zueinander parallele Innenflächen und/oder konstante Wandstärken (10) aufweisen oder dass der erste und der zweite Schwingungswandler (5, 15) an einander gegenüberliegenden Seitenwänden (9, 12) angeordnet sind, die zumindest in dem Messabschnitt ebene und/oder zueinander parallele Innenflächen und/oder konstante Wandstärken (10) aufweisen.

3. Messeinrichtung nach Anspruch 1 oder 2, **dadurch gekennzeichnet, dass** die weitere Seitenwand (16, 17) zumindest in dem zwischen dem ersten und dem zweiten Schwingungswandler (5, 6, 15) liegenden Messabschnitt außerhalb der wenigstens einen Vertiefung (18 - 21) eine konstante Wandstärke (10) aufweist und/oder ihre Innenfläche dort eben ist oder eine stetige Krümmung ohne Vorzeichenwechsel aufweist.

4. Messeinrichtung nach einem der vorangehenden Ansprüche, **dadurch gekennzeichnet, dass** die Seitenwand (9), an der, oder die Seitenwände (9, 12), an denen der erste und/oder der zweite Schwingungsschallwandler (5, 6, 15) angeordnet sind, gewinkelt zu der weiteren Seitenwand (16, 17) steht oder stehen.

5. Messeinrichtung nach einem der vorangehenden Ansprüche, **dadurch gekennzeichnet, dass** das Messrohr (3) zumindest in dem zwischen dem ersten und dem zweiten Schwingungswandler (5, 6, 15) gelegenen Messabschnitt einen rechteckigen Außenquerschnitt aufweist.

6. Messeinrichtung nach einem der vorangehenden Ansprüche, **dadurch gekennzeichnet, dass** die Vertiefung (18 - 21) einen ebenen oder gekrümmten, insbesondere kreissegmentförmigen, Vertiefungsboden und gewinkelt zu dem Vertiefungsboden verlaufende Vertiefungswände aufweist.

7. Messeinrichtung nach einem der vorangehenden Ansprüche, **dadurch gekennzeichnet, dass** die weitere Seitenwand (16, 17) wenigstens zwei separate Vertiefungen (18 - 21) aufweist.

8. Messeinrichtung nach einem der vorangehenden Ansprüche, **dadurch gekennzeichnet, dass** sie wenigstens zwei der weiteren Seitenwände (16, 17) aufweist, die wenigstens eine jeweilige Vertiefung (18 - 21) aufweisen.

9. Verfahren zur Ermittlung einer ein Fluid und/oder eine Fluidströmung des Fluids betreffenden Fluidgröße mit einer Messeinrichtung (1), die eine Steuereinrichtung (2), ein das Fluid aufnehmendes und/oder von dem Fluid durchströmbares Messrohr (3) und einen ersten und einen zweiten voneinander beabstandet an dem Messrohr (3) angeordneten Schwingungswandler (5, 6, 15) umfasst, wobei durch die Steuereinrichtung (2) der erste und/oder der zweite Schwingungswandler (5, 6, 15) angesteuert werden, um eine durch eine oder eine jeweilige Seitenwand (9, 12) des Messrohrs (3) geführte Welle anzuregen, wobei die geführte Welle Kompressionsschwingungen des Fluids anregt, die über das Fluid zu dem jeweils anderen Schwingungswandler (5, 6, 15) geführt und dort durch die Steuereinrichtung (2) zur Ermittlung von Messdaten erfasst werden, wobei die Fluidgröße durch die Steuereinrichtung (2) in Abhängigkeit der Messdaten ermittelt wird, wobei wenigstens eine weitere Seitenwand (16, 17) des Messrohres (3) wenigstens eine sich in Strömungsrichtung erstreckende Vertiefung (18 - 21) aufweist, durch die der Strömungsquerschnitt des Messrohres (3) vergrößert wird, wobei das Messrohr (3) zumindest in einem zwischen dem ersten und dem zweiten Schwingungswandler (5, 6, 15) gelegenen Messabschnitt einen abgesehen von der wenigstens einen Vertiefung (18 - 21) rechteckigen Innenquerschnitt aufweist, wobei die Vertiefung (18 - 21) oder Vertiefungen (18 - 21) ausschließlich in Seitenwänden vorgesehen sind, an denen keiner der Schwingungswandler (5, 6, 15) angeordnet ist, wobei der erste und der zweite Schwingungswandler (5, 6) an der gleichen Seitenwand (9) angeordnet sind und die Innenfläche dieser Seitenwand (9) und einer gegenüberliegenden Seitenwand (12) ein Hauptströmungsvolumen aufspannen, oder wobei der erste und der zweite Schwingungswandler (5, 15) an einander gegenüberliegenden Seitenwänden (9, 12) angeordnet sind, deren Innenflächen das Hauptströmungsvolumen aufspannen, wobei die wenigstens eine Vertiefung (18 - 21) außerhalb des Hauptströmungsvolumens liegt und ein jeweiliges Nebenströmungsvolumen bildet.

## Claims

1. Measuring device for determining a fluid variable relating to a fluid and/or to a fluid flow of the fluid, having a control device (2), having a measurement tube (3), which receives the fluid and/or through which the fluid can flow, and having a first and a second vibration transducer (5, 6, 15), which are arranged spaced apart from one another on the measurement tube, wherein, by way of the control device (2), the first and/or the second vibration transducer (5, 6, 15) can be actuated so as to induce a wave which is guided through a or a respective side wall (9, 12) of the measurement tube (3), wherein the guided wave induces compressional oscillations of the fluid that can be guided via the fluid to the in each case other vibration transducer (5, 6, 15) and, there, can be detected by the control device (2) for determining measurement data, wherein the fluid variable can be determined by the control device (2) as a function of the measurement data, wherein at least one further side wall (16, 17) of the measurement tube (3) has at least one depression (18-21) which extends in the flow direction and which enlarges the flow cross section of the measurement tube (3), wherein the measurement tube (3), at least in a measurement section situated between the first and second vibration transducers (5, 6, 15), has an internal cross section which, apart from the at least one depression (18-21), is rectangular, wherein the depression (18-21) or depressions (18-21) are provided exclusively in side walls on which none of the vibration transducers (5, 6, 15) are arranged, wherein the first and second vibration transducers (5, 6) are arranged on the same side wall (9) and the inner surface of this side wall (9) and of an opposite side wall (12) define a main flow volume, or wherein the first and second vibration transducers (5, 15) are arranged on mutually opposite side walls (9, 12), whose inner surfaces define the main flow volume, wherein the at least one depression (18-21) is situated outside the main flow volume and forms a respective secondary flow volume.

2. Measuring device according to Claim 1, **characterized in that** the first and second vibration transducers (5, 6) are arranged on the same side wall (9), and this side wall (9) and an opposite side wall (12), at least in the measurement section situated between the first and second vibration transducers, have planar and/or mutually parallel inner surfaces and/or constant wall thicknesses (10), or **in that** the first and second vibration transducers (5, 15) are arranged on mutually opposite side walls (9, 12), which, at least in the measurement section, have planar and/or mutually parallel inner surfaces and/or constant wall thicknesses (10).

3. Measuring device according to Claim 1 or 2, **characterized in that** the further side wall (16, 17), at least in the measurement section situated between the first and second vibration transducers (5, 6, 15), has, outside the at least one depression (18-21), a constant wall thickness (10) and/or its inner surface there is planar or has continuous curvature without a change in sign.

4. Measuring device according to one of the preceding claims, **characterized in that** the side wall (9) on which, or the side walls (9, 12) on which, the first and/or the second vibration transducer (5, 6, 15) are/is arranged, is/are at an angle to the further side wall (16, 17).

5. Measuring device according to one of the preceding claims, **characterized in that** the measurement tube (3), at least in the measurement section situated between the first and second vibration transducers (5, 6, 15), has a rectangular external cross section.

6. Measuring device according to one of the preceding claims, **characterized in that** the depression (18-21) has a planar or curved, in particular circular-segment-shaped, depression base and has depression walls which extend at an angle to the depression base.

7. Measuring device according to one of the preceding claims, **characterized in that** the further side wall (16, 17) has at least two separate depressions (18-21) .

8. Measuring device according to one of the preceding claims, **characterized in that** said measuring device has at least two of the further side walls (16, 17) which have at least one respective depression (18-21) .

9. Method for determining a fluid variable relating to a fluid and/or to a fluid flow of the fluid using a measuring device (1), which comprises a control device (2), a measurement tube (3), which receives the fluid and/or through which the fluid can flow, and a first and a second vibration transducer (5, 6, 15), which are arranged spaced apart from one another on the measurement tube (3), wherein, by way of the control device (2), the first and/or the second vibration transducer (5, 6, 15) are actuated so as to induce a wave which is guided through a or a respective side wall (9, 12) of the measurement tube (3), wherein the guided wave induces compressional oscillations of the fluid that are guided via the fluid to the in each case other vibration transducer (5, 6, 15) and, there, are detected by the control device (2) for determining measurement data, wherein the fluid variable is determined by the control device (2) as a function of the measurement data, wherein at least one further side wall (16, 17) of the measurement tube (3) has at least one depression (18-21) which extends in the flow direction and by which the flow cross section of the measurement tube (3) is enlarged, wherein the measurement tube (3), at least in a measurement section situated between the first and second vibration transducers (5, 6, 15), has an internal cross section which, apart from the at least one depression (18-21), is rectangular, wherein the depression (18-21) or depressions (18-21) are provided exclusively in side walls on which none of the vibration transducers (5, 6, 15) are arranged, wherein the first and second vibration transducers (5, 6) are arranged on the same side wall (9) and the inner surface of this side wall (9) and of an opposite side wall (12) define a main flow volume, or wherein the first and second vibration transducers (5, 15) are arranged on mutually opposite side walls (9, 12), whose inner surfaces define the main flow volume, wherein the at least one depression (18-21) is situated outside the main flow volume and forms a respective secondary flow volume.

## Revendications

1. Dispositif de mesure destiné à déterminer une grandeur fluidique relative à un fluide et/ou à un écoulement fluidique du fluide, ledit dispositif de mesure comprenant un dispositif de commande (2), un tube de mesure (3) recevant le fluide et/ou pouvant être traversé par le fluide et un premier et un deuxième convertisseur de vibrations (5, 6, 15) disposés sur le tube de mesure à distance l'un de l'autre, le premier et/ou le deuxième convertisseur de vibrations (5, 6, 15) pouvant être commandés par le dispositif de commande (2) afin de générer une onde guidée à travers une paroi latérale ou une paroi latérale respective (9, 12) du tube de mesure (3), l'onde guidée générant des vibrations de compression du fluide qui peuvent être guidées par le bais du fluide vers l'autre convertisseur de vibrations respectif (5, 6, 15) où elles peuvent être détectées par le dispositif de commande (2) pour déterminer des données de mesure, la grandeur fluidique pouvant être déterminée par le dispositif de commande (2) en fonction des données de mesure, au moins une autre paroi latérale (16, 17) du tube de mesure (3) comportant au moins un évidement (18 - 21) qui s'étend dans la direction d'écoulement et qui augmente la section transversale d'écoulement du tube de mesure (3), le tube de mesure (3) ayant, au moins dans une portion de mesure située entre le premier et le deuxième convertisseur de vibrations (5, 6, 15), une section transversale intérieure rectangulaire à l'exception de l'au moins un évidement (18 - 21), l'évidement (18 - 21) ou les évidements (18 - 21) étant prévus exclusivement dans des parois latérales où aucun des convertisseurs de vibrations (5, 6, 15) n'est disposé, le premier et le deuxième convertisseur de vibrations (5, 6) étant disposés sur la même paroi latérale (9) et la surface intérieure de cette paroi latérale (9) et d'une paroi latérale opposée (12) couvrant un volume d'écoulement principal, ou le premier et le deuxième convertisseur de vibrations (5, 15) étant disposés sur des parois latérales opposées (9, 12) dont les surfaces intérieures couvrent le volume d'écoulement principal, l'au moins un évidement (18 - 21) étant situé à l'extérieur du volume d'écoulement principal et formant un volume d'écoulement secondaire respectif.

2. Dispositif de mesure selon la revendication 1, **caractérisé en ce que** le premier et le deuxième convertisseur de vibrations (5, 6) sont disposés sur la même paroi latérale (9) et cette paroi latérale (9) et une paroi latérale opposée (12) ont, au moins dans la portion de mesure située entre le premier et le deuxième convertisseur de vibrations, des surfaces intérieures planes et/ou parallèles entre elles et/ou des épaisseurs de paroi constantes (10), ou **en ce que** le premier et le deuxième convertisseur de vibrations (5, 15) sont disposés sur des parois latérales opposées (9, 12) qui ont, au moins dans la section de mesure, des surfaces intérieures planes et/ou parallèles entre elles et/ou des épaisseurs de paroi constantes (10).

3. Dispositif de mesure selon la revendication 1 ou 2, **caractérisé en ce que** l'autre paroi latérale (16, 17) a, au moins dans la portion de mesure située entre le premier et le deuxième convertisseur de vibrations (5, 6, 15) à l'extérieur de l'au moins un évidement (18 - 21), une épaisseur de paroi (10) constante et/ou sa surface intérieure est plane à cet endroit ou présente une courbure constante sans changement de signe.

4. Dispositif de mesure selon l'une des revendications précédentes, **caractérisé en ce que** la paroi latérale (9) ou les parois latérales (9, 12), où le premier et/ou le deuxième convertisseur de vibrations (5, 6, 15) sont disposés, se tiennent angulairement par rapport à l'autre paroi latérale (16, 17).

5. Dispositif de mesure selon l'une des revendications précédentes, **caractérisé en ce que** le tube de mesure (3) a, au moins dans la portion de mesure située entre le premier et le deuxième convertisseur de vibrations (5, 6, 15), une section transversale extérieure rectangulaire.

6. Dispositif de mesure selon l'une des revendications précédentes, **caractérisé en ce que** l'évidement (18 - 21) comporte un fond plan ou incurvé, notamment en forme de segment de cercle, et des parois s'étendant angulairement par rapport au fond.

7. Dispositif de mesure selon l'une des revendications précédentes, **caractérisé en ce que** l'autre paroi latérale (16, 17) comporte au moins deux évidements (18 - 21) distincts.

8. Dispositif de mesure selon l'une des revendications précédentes, **caractérisé en ce qu'**il comporte au moins deux des autres parois latérales supplémentaires (16, 17) qui comportent au moins un évidement (18 - 21) respectif.

9. Procédé de détermination d'une grandeur fluidique relative à un fluide et/ou à un écoulement fluidique du fluide à l'aide d'un dispositif de mesure (1) qui comporte un dispositif de commande (2), un tube de mesure (3) recevant le fluide et/ou pouvant être traversé par le fluide, et un premier et un deuxième convertisseur de vibrations (5, 6, 15) disposés sur le tube de mesure (3) à distance l'un de l'autre, le premier et/ou le deuxième convertisseur de vibrations (5, 6, 15) étant commandés par le dispositif de commande (2) afin de générer une onde guidée à travers une paroi latérale ou une paroi latérale respective (9, 12) du tube de mesure (3), l'onde guidée générant des vibrations de compression du fluide qui sont guidées par le biais du fluide vers l'autre convertisseur de vibrations respectif (5, 6, 15) où elles sont détectées par le dispositif de commande (2) pour déterminer des données de mesure, la grandeur fluidique étant déterminée par le dispositif de commande (2) en fonction des données de mesure, au moins une autre paroi latérale (16, 17) du tube de mesure (3) comportant au moins un évidement (18 - 21) qui s'étend dans la direction d'écoulement et qui augmente la section transversale d'écoulement du tube de mesure (3), le tube de mesure (3) ayant, au moins dans une portion de mesure située entre le premier et le deuxième convertisseur de vibrations (5, 6, 15), une section transversale intérieure rectangulaire à l'exception de l'au moins un évidement (18 - 21), l'évidement (18 - 21) ou les évidements (18 - 21) étant prévus exclusivement dans des parois latérales où aucun des convertisseurs de vibrations (5, 6, 15) n'est disposé, le premier et le deuxième convertisseur de vibrations (5, 6) étant disposés sur la même paroi latérale (9) et la surface intérieure de cette paroi latérale (9) et d'une paroi latérale opposée (12) couvrant un volume d'écoulement principal, ou le premier et le deuxième convertisseur de vibrations (5, 15) étant disposés sur des parois latérales opposées (9, 12) dont les surfaces intérieures couvrent le volume d'écoulement principal, l'au moins un évidement (18 - 21) étant situé à l'extérieur du volume d'écoulement principal et formant un volume d'écoulement secondaire respectif.
